# EUROPÄISCHE PATENTSCHRIFT

(11) **EP 2 100 050 B1**
(45) Veröffentlichungstag und Bekanntmachung des Hinweises auf die Patenterteilung: **03.08.2011**
(21) Anmeldenummer: 07818771.3
(22) Anmeldetag: 08.10.2007
(51) Int. Cl.: F16D 48/06

(54) **VERFAHREN ZUM STEUERN EINER REIBUNGSKUPPLUNG EINES FAHRZEUGES**
METHOD FOR CONTROLLING A FRICTION CLUTCH OF A VEHICLE
PROCEDE DE COMMANDE D'UN EMBRAYAGE A FRICTION D'UN VEHICULE

(30) Priorität: 30.11.2006 DE 102006056530
(43) Veröffentlichungstag der Anmeldung: 16.09.2009
(73) Patentinhaber: VOLKSWAGEN AG, 38436 Wolfsburg (DE)
(72) Erfinder: MEYER, Christian, 29556 Suderburg (DE); CAPPELMANN, Bernd, 38176 Wendeburg (DE); HOFMANN, Rainer, 38350 Helmstedt (DE)
(86) Internationale Anmeldenummer: PCT/EP2007/008696
(87) Internationale Veröffentlichungsnummer: WO 2008/064733

(56) Entgegenhaltungen:
- WO-A-2006/119918
- DE-A1- 10 352 611
- DE-A1- 19 750 824
- FR-A- 2 791 749

## Beschreibung

Die Erfindung betrifft ein Verfahren zum Steuern einer zwischen einer Antriebsmaschine und einem Getriebe wirksamen Reibungskupplung nach Einleitung eines Anfahr- oder Gangschaltvorganges mit Berücksichtigung der Veränderungen eines festgelegten Arbeitspunktes der Kennlinie der Reibungskupplung, umfassend die Verfahrensschritte:
a) Betätigung der Reibungskupplung in Schließrichtung bis zu einem von einer Steuereinrichtung vorgegebenen Ausmaß, wenn der Steuereinrichtung ein eingelegter Gang signalisiert ist,
b) Auswerten, mittels der Steuereinrichtung, der Drehzahl einer dem Getriebe zugeordneten Getriebeeingangswelle mittels eines Drehzahlsensors während des Verfahrensschrittes a),
c) Beenden des Verfahrensschrittes a) sobald der Drehzahlsensor der Steuereinrichtung eine definierte Änderung der Getriebeeingangswellendrehzahl signalisiert.

Bei Fahrzeugen mit automatisiert schaltenden Getrieben ist insbesondere die Steuerung der zwischen einer Antriebsmaschine und einem Getriebe wirksamen Reibungskupplung von herausgehobener Bedeutung, um beim Anfahren aus dem Stand oder beim Schalten während der Fahrt die Momentenübertragung von der Antriebsmaschine zum Getriebe im Hinblick auf Komfort und minimalem Verlust an Vortriebsleistung optimal realisieren zu können. Das Öffnungs- bzw. Schließverhalten der Reibungskupplung wird zu diesem Zweck sensorisch überwacht, damit die für den jeweiligen Anfahr- oder Gangschaltvorgang erforderlichen Kriterien hinsichtlich der Momentenübertragung erfüllt sind. Ein bekanntes Verfahren zur Ermittlung des Schließzustandes bzw. des Öffrlungsgrades der Reibungskupplung besteht darin, dass wenigstens eines derjenigen Bauteile innerhalb der Kupplung hinsichtlich seiner Position überwacht wird, welches für das Öffnen bzw. Schließen der Reibungskupplung zu betätigen ist. Eine derartige Kupplungswegsensierung kann beispielsweise ein Ausrücklager einer tellerfederbetätigten Reibungskupplung zugeordnet sein. Mittels einer solchen Kupplungswegsensierung werden aber nur indirekt Rückschlüsse auf das übertragene Kupplungsmoment gezogen. Sobald sich beispielsweise an der Reibungskupplung aufgrund eines erhöhten Energieeintrages Veränderungen am Reibbelag ergeben oder verschleißbedingt eine Nachstellung der Kupplung ausgelöst wird, ergibt sich ein neuer Zusammenhang zwischen Kupplungsweg und Übertragungsmoment.

In diesem Zusammenhang beschreibt die DE 4011 850 A1 für unterschiedliche Betriebszustände des Fahrzeugs Möglichkeiten, wie ein optimales Übertragungsverhalten der Reibungskupplung sichergestellt werden kann. So wird in einer ersten Verfahrensvariante bei eingelegtem Gang und stehendem Fahrzeug die Reibungskupplung mit definierter Geschwindigkeit bis zu einer Position geschlossen, bei der zwar ein Moment eingeleitet, dieses Moment jedoch geringer ist als dasjenige, durch das das Fahrzeug bewegt werden würde. Diese Position soll hier als "Arbeitspunkt" der Reibungskupplung bezeichnet werden. Bei Erreichen eines bestimmten Momentes wird dann der Weg beziehungsweise der Ort des den Kupplungseingriffszustand repräsentierenden Bauteils ermittelt und einem Speicher zugeführt. Der Arbeitspunkt der Reibungskupplung wird damit im Rahmen einer aufwendigen Regelung jeweils dynamisch ermittelt. Die DE 40 11 850 A1 beschreibt noch eine weitere Verfahrensvariante, die bei nicht eingelegtem Gang und stehendem Fahrzeug ebenfalls nur eine Bestimmung des Arbeitspunktes der Reibungskupplung ermöglicht.

Aus der gattungsbildenden WO 2006/119918 A1 ist ein weiteres Verfahren zum Bestimmen des dort "Anlegepunkt" genannten Arbeitspunktes einer automatisch betätigten Reibungskupplung bekannt. Die Bestimmung des Arbeitspunktes erfolgt dabei jeweils im Rahmen jedes Einkuppelvorgangs, um den Stellweg vor dem Arbeitspunkt, der zur Vermeidung von Zeitverlusten möglichst schnell überwunden werden soll, von dem Stellweg nach dem Arbeitspunkt, der zur Vermeidung eines Einkuppelrucks langsamer und insbesondere geregelt überwunden werden soll, zu unterscheiden. Mit anderen Worten entspricht das von der Steuereinrichtung vorgegebene Ausmaß, bis zu dem bei dem bekannten Verfahren die Reibkupplung in Schließrichtung zu betätigen ist, dem jeweils neu zu ermittelnden Arbeitspunkt. Hierzu wird die Drehzahl der Getriebeeingangswelle überwacht und ein lokales Minimum ihres Verlaufs ermittelt. Dieses Minimum bzw. die zum Zeitpunkt des Auftretens dieses Minimums herrschende Einstellung der Kupplung wird als der Arbeitspunkt definiert. Danach wird bis zur vollständigen Zustellung der Kupplung in den geregelten Betrieb übergegangen. Nachteilig bei diesem Verfahren ist das Erfordernis der aufwendigen Ermittlung des Arbeitspunktes bei jedem Kupplungsvorgang.

Aus der DE 197 50 824 A1 ist ein Verfahren zur fortwährenden Korrektur des dort "Grenzstellungsposition" genannten Arbeitspunktes einer Reibkupplung bekannt. Auch bei diesem bekannten Verfahren ist es das Ziel, den rasch zu überwindenden Stellweg vor dem Arbeitspunkt von dem entsprechend der Fahrsituation mehr oder weniger langsam zu überwindenden Stellweg nach dem Arbeitspunkt zu unterscheiden, um die Reibkupplung entsprechend unterschiedlich ansteuern zu können. Dabei wird eine für den Arbeitspunkt repräsentative Stellgröße als Stellpunkt im Speicher einer für die Kupplungssteuerung zuständigen Steuereinrichtung hinterlegt. Bei jedem Einkuppelvorgang wird die Reibkupplung bis zu dem Stellpunkt rasch zugestellt und danach entsprechend der Fahrsituation geregelt langsamer weiter zugestellt. Dabei wird der Verlauf der Kurbelwellendrehzahl überwacht und mit einer entsprechenden Kurbelwellendrehzahlkennlinie verglichen. Werden Abweichungen von der Kennlinie, d.h. vom Soll-Verlauf der Kurbelwellendrehzahl festgestellt, wird gefolgert, dass der gespeicherte Stellpunkt nicht dem tatsächlichen Arbeitspunkt der Reibkupplung entspricht und der gespeicherte Stellpunkt entsprechend korrigiert, sodass beim nächsten Einkuppelvorgang eine bessere Übereinstimmung von gespeichertem Stell- und tatsächlichem Arbeitspunkt und somit ein verbessertes Kupplungsverhalten gegeben ist. Nachteilig bei diesem Verfahren ist, die Übereinstimmung zwischen dem gespeicherten Stellpunkt und dem tatsächlichen Arbeitspunkt, der z.B. temperatur- und verschleißabhängigen Schwankungen unterliegt, stets suboptimal ist und die Korrektur der Realität hinterherhinkt.

Vor diesem Hintergrund liegt der Erfindung die Aufgabe zugrunde, für die Steuerung von Reibungskupplungen ein Verfahren bereitzustellen, das auch ohne aufwendige Regelung Veränderungen des Arbeitspunktes der Reibungskupplung angemessen berücksichtigt.

Diese Aufgabe wird in Verbindung mit den Merkmalen des Oberbegriffs von Anspruch 1 dadurch gelöst, dass das vorgegebene Ausmaß, bis zu dem die Reibkupplung in Verfahrensschritt a) zu betätigen ist, ein von der Steuereinrichtung gemäß einer Kennlinie vorgegebener Stellpunkt ist,
dass die definierte Änderung der Getriebeeingangswellendrehzahl ein Überschreiten eines vorgegebenen Grenzwertes ist und
dass Verfahrensschritt c) nur dann durchgeführt wird, wenn das Überschreiten des Grenzwertes vor Erreichen des von der Kennlinie vorgegebenen Stellpunktes erfolgt.

Die Unteransprüche betreffen besonders zweckmäßige Weiterbildungen der Erfindung.

Während eines Anfahr- oder Gangschaltvorganges wird die Reibungskupplung in Schließrichtung bis zu einem von einer Steuereinrichtung gemäß einer Kennlinie vorgegebenen Arbeitspunkt betätigt, wenn der Steuereinrichtung ein eingelegter Gang signalisiert ist. Parallel zu dieser Betätigung wird die Drehzahl einer dem Getriebe zugeordneten Getriebeeingangswelle mittels eines Drehzahlsensors ausgewertet. Die Betätigung der Reibungskupplung in Schließrichtung wird abgebrochen, wenn ein Drehzahlsensor der Steuereinrichtung die Überschreitung eines vorgegebenen Grenzwertes für die Drehzahländerung der Getriebeeingangswelle signalisiert, bevor die sich schließende Reibungskupplung den von der Kennlinie vorgegebenen Arbeitspunkt erreicht.

Anders als bei der DE 40 11 850 A1 wird also nicht erst ein Arbeitspunkt der Kupplung gesucht, der dann an eine Speichereinheit der Steuereinrichtung übergeben wird. Und anders als bei der WO 20061119918 A1 wird nicht bei jedem Einkuppelvorgang der Arbeitspunkt der Reibkupplung neu bestimmt. Andererseits wird die Reibkupplung aber auch nicht wie bei der DE 197 50 824 A1 in jedem Fall bis zum vorgegeben, ggf. jenseits des Arbeitspunktes liegenden Stellpunkt zugestellt. Vielmehr wird nur im Ausnahmefall ein Abbruch der Betätigung in Schließrichtung vorgenommen, wenn der durch die Kennlinie vorgegebene Stellpunkt zu einer nicht vorgesehenen Drehzahländerung an der Getriebeeingangswelle führt. Es wird mit anderen Worten nicht der richtige Arbeitspunkt gesucht, sondern ein aufgrund von Verschleißnachstellungen oder erhöhtem Energieeintrag entstehender falscher Stellpunkt erkannt und hinsichtlich seiner Auswirkungen für das Schaltverhalten und/oder die Betriebssicherheit des Fahrzeuges unschädlich gemacht.

Ein besonderer Vorteil der Erfindung ist darin zu sehen, dass dieses Verfahren auch auf Reibungskupplungen mit selbsttätigen Verschleißnachstelleinrichten (siehe hierzu beispielsweise WO 2004036077 A1, DE 100 11 418 A1 oder DE 10 2005 015 970 A1) anwendbar ist. Außerdem werden keine zusätzlichen Sensoren benötigt. Sämtliche der für das erfindungsgemäße Verfahren notwendigen Signale können von Sensoren gewonnen werden, die ohnehin in einer Antriebsanordnung mit automatisiert schaltenden Getriebe vorhanden sind. Hervorzuheben ist auch, dass das erfindungsgemäße Verfahren so ausgestaltet werden kann, dass es für den Fahrzeugbenutzer selbst nicht spürbar ist. Zu diesem Zweck werden die von der Kennlinie vorgegebenen Stellpunkte durch so genanntes Kupplungspulsen erreicht. Es wird also nur kurzzeitig die Kupplung in Schließrichtung betätigt, um im Anschluss an den so vorgegebenden Impuls eine Reaktion der Getriebeeingangswelle zu beobachten und auszuwerten. Bevor seitens der Steuereinrichtung also eine Momentenübertragung wirksam durchgeschaltet wird, folgt zunächst nach Art einer Abtastung über Kupplungsimpulse eine Überprüfung, damit nicht unbeabsichtigt ein zu hohes Übertragungsmoment von der Reibungskupplung übertragen wird. Auf diese Weise wird sichergestellt, dass das Fahrzeug nicht ungewollt losrollt oder bei einem Anfahrvorgang oder Kriechvorgang unerwünscht beschleunigt wird.

Zur sensorischen Absicherung des erfindungsgemäßen Verfahrens wird gemäß einer Weiterbildung der Erfindung nicht nur die Drehzahl der Getriebeeingangswelle, sondern auch der Drehzahlgradient erfasst. Der Reibungskupplungspuls wird demzufolge dann abgebrochen, wenn sowohl die Drehzahl als auch der Drehzahlgradient ihre jeweils vorgegebenen Grenzwerte überschreiten.

Eine ungewollte Momentenübertragung wird mit hoher Verlässigkeit dadurch ausgeschlossen, dass nach Abbruch des Kupptungspulses die Kupplung um einen vorgegebenen Betrag in Öffnungsrichtung betätigt wird. Um punktuelle Störungen und Fehlmessungen sicher ausschließen zu können, wird das Kupplungspulsen in einer vorgegebenen Häufigkeit wiederholt. Vorzugsweise nach 3 Pulsen wird der in der Kennlinie festgelegte Arbeitßpunkt dann beispielsweise durch Verschiebung der Kennlinie korrigiert. Das Ausmaß der Verschiebung der Kennlinie wird bevorzugt an dem Ausmaß der Drehzahländerung oder der Drehzahlgradientenänderung orientiert.

In besonders vorteilhafter Weise kann das erfindungsgemäße Verfahren sowohl bei stehendem Fahrzeug als auch bei fahrendem Fahrzeug angewendet werden, um so einerseits für den Anfahrvorgang und andererseits für alle Gangschaltvorgänge ein hohes Maß an Sicherheit gegen Fehlbetätigungen der Reibungskupplung zu gewährleisten.

Ein vorteilhaftes Ausführungsbeispiel der Erfindung wird mit Hilfe der Zeichnung erläutert. Es zeigt
- Figur 1:: den schematischen Aufbau eines Fahrzeuges, das mit dem erfindungsgemäßen Verfahren betreibbar ist,
- Figur 2:: für die Getriebeeingangswelle einen Drehzahlverlauf über der Zeit bei Anwendung des erfindungsgemäßen Verfahrens,
- Figur 3:: die Gegenüberstellung eines Reibungskupplungspulses und eines daraus resultierenden Drehzantvenaufes über der Zeit bei Anwendung des erfindungsgemäßen Verfahrens.

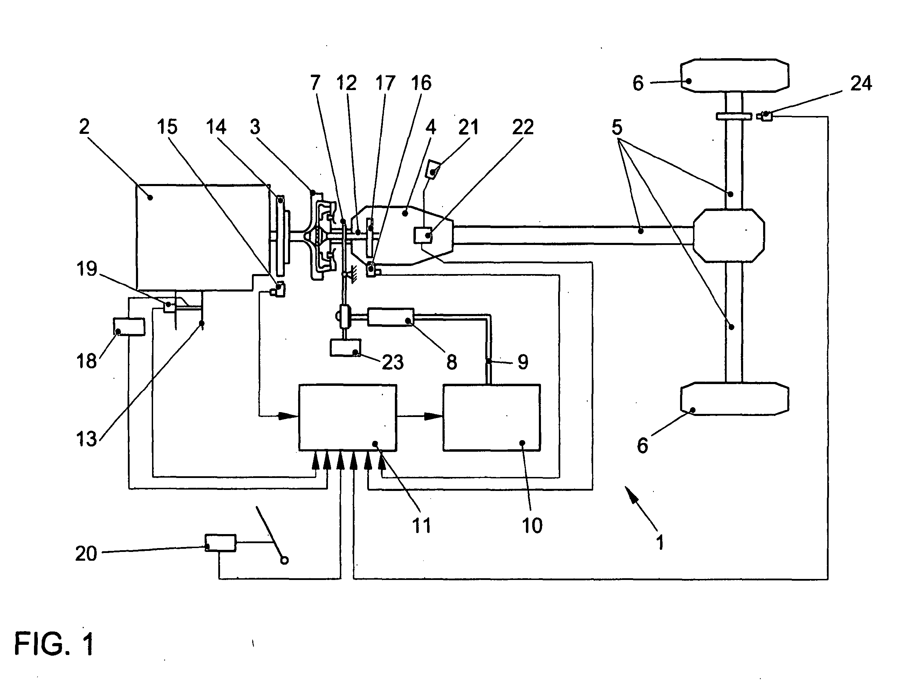

Man erkennt in Figur 1 in schematischer Darstellung ein insgesamt mit 1 bezeichnetes Fahrzeug, dessen Antriebsstrang hier als wesentliche Elemente eine Antriebsmaschine 2, eine Reibungskupplung 3, ein Getriebe 4, Antriebswellen 5 und Räder 6 aufweist. Die Reibungskupplung 3 ist über einen Betätigungsmechanismus 7, der ein Ausrücklager und eine daran angreifende Gabel umfassen kann, ein- und ausrückbar. Der Betätigungsmechanismus 7 wird über ein Stellglied in Form eines hydraulischen Zylinders 8 betätigt, der seinerseits über eine Leitung 9 mit einem Stellglied 10 verbunden ist. Letzteres erhält Steuersignale von einer Steuereinrichtung 11, die beispielsweise Betriebszustände einer Getriebeeingangswelle 12, einer Drosselklappe 13 oder einer der Antriebsmaschine 2 zugeordneten Schwungmasse 14 auswertet. Dazu ist beispielsweise ein Drehzahlsensor 15 vorgesehen, der die Verzahnung auf die Schwungmasse 14 abtastet. Ein weiterer Drehzahlsensor 16 ermittelt die Getriebeeingangswellendrehzahl über ein schematisch angedeutetes Zahnrad 17. Weitere Signale werden beispielsweise von Drosselklappensensoren 18, 19 und einem Fahrpedalsensor 20 geliefert. Für die Umsetzung des erfindungsgemäßen Verfahrens von herausgehobener Bedeutung ist schließlich noch ein einem Schalthebel 21 zugeordneter Gangwahlsensor 22 sowie ein Kupplungswegsensor 23, mit dem der Öffnungsgrad bzw. Schließzustand der Reibungskupplung 3 überwacht werden kann. Dieser Kupplungswegsensor kann auch für nicht zur Erfindung gehörende Verfahren genutzt werden, die beispielsweise bei Schaltvorgängen oder Anfahrvorgängen so genannter Reibungskupplungslagerregelungen verwendet werden. Schließlich ist mit 24 noch ein Fahrgeschwindigkeitssensor bezeichnet, der ebenfalls mit der Steuereinrichtung 11 verbunden ist.

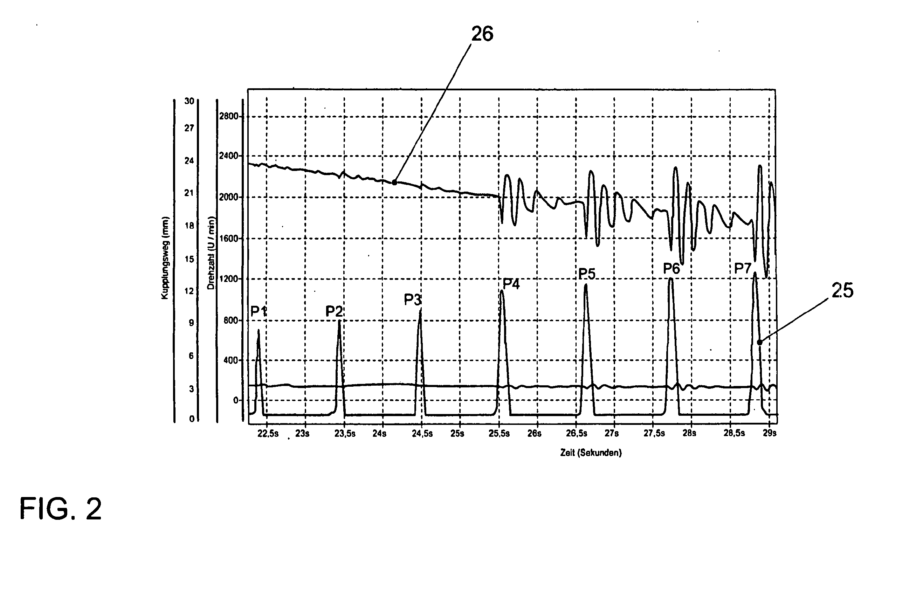

Wesentlich für das erfindungsgemäße Verfahren ist, dass zunächst von der Steuereinrichtung erkannt wird, ob ein Anfahrvorgang oder Gangschaltvorgang beabsichtigt ist. Dies kann beispielsweise dann der Fall sein, wenn der Gangwahlsensor 22 aufgrund von Betätigungen am Schalthebel 21 einen neu eingelegten Gang erkennt, der Fahrzeuggeschwindigkeitssensor 24 einen Fahrzeugstillstand meldet und der Fahrpedalsensor 20 Signale liefert, die einen Anfahrwunsch des Fahrers erkennen lassen. Erfindungsgemäß wird bei Vorliegen dieser Bedingungen nun nicht die Reibungskupplung 3 gleich geschlossen, sondern es erfolgen zunächst kurzzeitige Schließimpulse mittels des Stellgliedes 8 bis zu vorgegebenen Stellpunkten, wie dies in Figur 2 am Verlauf der Kurve 25 dargestellt ist. Die Impulsfolge ist so gewählt, dass beispielsweise im Abstand von ungefähr einer zehntel Sekunde der Kupplungsweg allmählich vergrößert wird, bis an der Getriebeeingangswelle 12 mittels des Sensors 16 Veränderungen der Drehzahl feststellbar sind. Die Reaktion der Getriebeeingangswelle 12 bei einem sich bewegenden Fahrzeug als Reaktion auf Schließimpulse einer Reibungskupplung 3 ist in Figur 2 anhand des Verlaufs der Kurve 26 erkennbar. Die einzelnen Spitzen der Reibungskupplungspulse sind in Figur 2 mit P1 bis P7 bezeichnet. Wenn gemäß in der Steuereinrichtung 11 abgelegter Kennlinie der zu P4 gehörende Kupplungsweg auch dem Arbeitspunkt der Reibungskupplung 3 entspricht, kann vom Pulsen der Reibungskupplung 3 zum endgültigen Schließvorgang übergegangen werden, also die Übertragung des vollen Drehmomentes eingeleitet werden. Wenn gemäß Kennlinie allerdings erst mit dem zum Schließimpuls 6 gehörenden Kupplungsweg eine Reaktion der Getriebeeingangswelle 12 hätte erfolgen dürfen, würde das erfindungsgemäße Verfahren bereits mit dem Schließimpuls P4 in Gang gesetzt werden. In diesem Fall wird nämlich schon vor Erreichen des von der Kennlinie vorgegebenen Stellpunktes P6 durch den Drehzahlsensor 16 eine Drehzahländerung der Getriebeeingangswelle signalisiert, die dann über die Steuereinrichtung 11 dazu führt, dass eine weitere Momentenübertragung durch die Reibungskupplung 3 unterbleibt. Um Störfaktoren auszuschließen kann dann von der Steuereinrichtung 11 eine neue Schließimpulsfolge gestartet werden. Sollte eine vorgegebene Häufigkeit, beispielsweise 3 Wiederholungen, überschritten werden, erfolgt durch die Steuereinrichtung innerhalb der Kennlinie eine neue Zuordnung für den Arbeitspunkt der Reibungskupplung 3.

Die Steigerung der Kupplungsweglänge beim Pulsen sowie der Abstand zwischen den Schließimpulsen ist so gewählt, dass für den Fahrzeugnutzer selbst diese Sicherheitsmaßnahme gar nicht spürbar wird. Bevorzugt wird dazu ausgehend vom Anfangsimpuls P1 beispielsweise ein Betrag von 5 bis 15 Prozent gewählt, um den für den nächsten Schließimpuls jeweils die Kupplungsweglänge vergrößert wird. Die Impulsdauer selbst beträgt zwischen 0,05 und 0,2 Sekunden und ist damit ausreichend kurz, um Rückwirkungen auf den Fahrer zu vermeiden.

Am Verlauf der Kurve 26 ist erkennbar, dass sich die Getriebewelleneingangsdrehzahl allmählich verringert, weil ein Gangwechsel unmittelbar bevorsteht und zu diesem Zweck die Antriebsmaschine keine Signale zur Beschleunigung oder Aufrechterhaltung der Geschwindigkeit vom Fahrpedalsensor 20 erhält. Anstelle eines solch fallenden Verlaufes kann beispielsweise bei einem Anfahrvorgang aufgrund einer relativ stabilen Leerlaufdrehzahl der Verlauf der Kurve 26 auch im Wesentlichen Horizontal ausfallen.

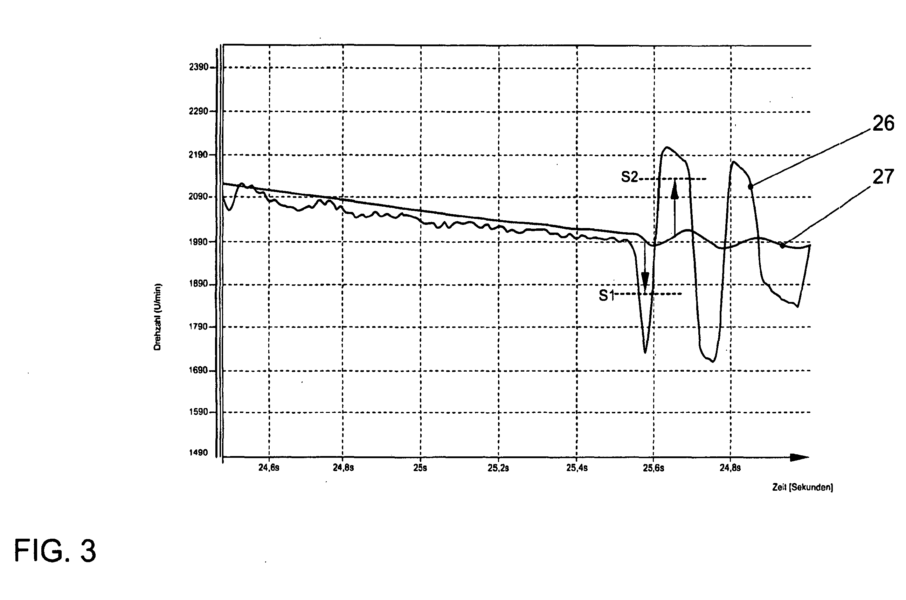

Figur 3 zeigt in einer Vergrößerung einen Ausschnitt aus der Kurve 26. In der Steuereinrichtung 11 sind Schwellwerte S1 und S2 festgelegt, die als Grenzwert dienen, um beispielsweise bei einem ungefilterten Signal aus dem Drehzahlsensor 16 ein Kriterium festzulegen, nach dem ein Abbruch des Kupplungspulsens einzuleiten ist. Der mit 27 bezeichnete Kurvenverlauf ergibt sich, wenn das vom Drehzahlsensor 16 gelieferte Signal gefiltert wird. Auch zu einem solch gefilterten Signal können Schwellwerte festgelegt werden, die aus Gründen der Übersichtlichkeit aber hier nicht in der Figur 3 eingetragen sind.

Bevorzugt wird das Kupplungspulsen erst dann abgebrochen, wenn sowohl die Schwelle S1 als auch die Schwelle S2 durchbrochen worden sind. Gemäß einer Weiterbildung der Erfindung werden die Beträge der Schwellwerte gangabhängig unterschiedlich groß vorgegeben. Dadurch kann dem unterschiedlichen Resonanzverhalten des Getriebes in dem jeweils eingelegten Gang besonders Rechnung getragen werden. Ebenso können die Abstände zwischen den einzelnen Schließpulsen P1 bis Pn sowie die Anzahl der Schließimpulse gangabhängig vorgegeben werden.

Mit dem erfindungsgemäßen Verfahren und seinen Weiterbildungen wird insgesamt eine ausgewogene Balance zwischen Komfort einerseits und Sicherheit vor unbeabsichtigten Kupplungsbetätigungen andererseits gewährleistet.

## Patentansprüche

1. Verfahren zum Steuern einer zwischen einer Antriebsmaschine (2) und einem Getriebe (4) wirksamen Reibungskupplung (3) nach Einleitung eines Anfahr- oder Gangschaltvorganges, umfassend die Verfahrensschritte:
a) Betätigung der Reibungskupplung (3) in Schließrichtung bis zu einem von einer Steuereinrichtung (11) vorgegebenen Ausmaß, wenn der Steuereinrichtung (11) ein eingelegter Gang signalisiert ist,
b) Auswerten, mittels der Steuereinrichtung (11), der Drehzahl einer dem Getriebe (4) zugeordneten Getriebeeingangswelle (12) mittels eines Drehzahlsensors (16) während des Verfahrensschrittes a),
c) Beenden des Verfahrensschrittes a) sobald der Drehzahlsensor (16) der Steuereinrichtung (11) eine definierte Änderung der Getriebeeingangswellendrehzahl signalisiert,
**dadurch gekennzeichnet,**
**dass** das vorgegebene Ausmaß, bis zu dem die Reibkupplung (3) in Verfahrensschritt a) zu betätigen ist, ein von der Steuereinrichtung gemäß einer Kennlinie vorgegebener Stellpunkt ist,
**dass** die definierte Änderung der Getriebeeingangswellendrehzahl ein Überschreiten eines vorgegebenen Grenzwertes ist und
**dass** Verfahrensschritt c) nur dann durchgeführt wird, wenn das Überschreiten des Grenzwertes vor Erreichen des von der Kennlinie vorgegebenen Stellpunktes erfolgt.

2. Verfahren nach Anspruch 1, **dadurch gekennzeichnet, dass** die Steuereinrichtung (11) das Drehzahlsignal und einem daraus abgeleiteten Drehzahlgradienten verarbeitet.

3. Verfahren nach Anspruch 2, **dadurch gekennzeichnet, dass** der Verfahrensschritt gemäß Anspruch 1 abgebrochen wird, wenn sowohl die Drehzahl als auch der Drehzahlgradient ihre jeweils vorgegebenen Grenzwerte überschreiten.

4. Verfahren nach wenigstens einem der Ansprüche 1 bis 3, **dadurch gekennzeichnet, dass** nach Abbruch des Verfahrensschrittes a) die Kupplung um einen vorgegebenen Betrag in Öffnungsrichtung betätigt wird, so dass eine Beaufschlagung einer Getriebeeingangswelle (12) mit einem Drehmoment ausgeschlossen ist.

5. Verfahren nach wenigstens einem der Ansprüche 1 bis 4, **dadurch gekennzeichnet, dass** die Verfahrensschritte a) und b) in einer vorgegebenen Häufigkeit insbesondere 2 bis 5 mal, wiederholt werden.

6. Verfahren nach wenigstens einem der Ansprüche 1 bis 5, **dadurch gekennzeichnet, dass** nach Überschreitung der vorgegebenen Häufigkeit von Wiederholungen der Verfahrensschritte a) bis c) der Arbeitspunkt der Reibungskupplung (3) korrigiert wird.

7. Verfahren nach wenigstens einem der Ansprüche 1 bis 6, **dadurch gekennzeichnet, dass** das Ausmaß der Korrektur des Asbeitspunktes in Abhängigkeit vom Ausmaß der Drehzahländerung gemäß Verfahrensschritt c) erfolgt.

8. Verfahren nach Anspruch 1, **dadurch gekennzeichnet, dass** die Verfahrensschritte a) und b) eingeleitet werden, wenn das Fahrzeug steht.

9. Verfahren nach Anspruch 1, **dadurch gekennzeichnet, dass** die Verfahrensschritte a) und b) eingeleitet werden, wenn während der Fahrt des Fahrzeugs der Steuereinrichtung (11) ein bevorstehender Gangschaltvorgang signalisiert wird.

## Claims

1. Method for controlling a friction clutch (3), which acts between a drive engine (2) and a gearbox (4), after the initiation of a starting or gearshift process, with consideration being given to the changes in a set operating point of the characteristic curve of the friction clutch, comprising the method steps:
a) actuating the friction clutch (3) in the closing direction, to an extent predefined by a control device (11), when it is signalled to the control device (11) that a gear is engaged,
b) during method step a), evaluating by means of the control device (11) the rotational speed of a gearbox input shaft (12), which is assigned to the gearbox (4), by means of a rotational speed sensor (16),
c) ending method step a) when the rotational speed sensor (16) of the control device (11) signals a defined change in the gearbox input shaft rotational speed,
**characterized**
**in that** the predefined extent to which the friction clutch (3) should be actuated in method step a) is an actuating point predefined by the control device according to a characteristic curve,
**in that** the defined change in the gearbox input shaft rotational speed is an exceedance of a predefined limit value, and
**in that** method step c) is carried out only if the exceedance of the limit value takes place before the actuating point predefined by the characteristic curve is reached.

2. Method according to Claim 1, **characterized in that** the control device (11). processes the rotational speed signal and a rotational speed gradient derived therefrom.

3. Method according to Claim 2, **characterized in that** the method step a) according to Claim 1 is terminated if both the rotational speed and also the rotational speed gradient exceed their respective predefined limit values.

4. Method according to at least one of Claims 1 to 3, **characterized in that**, after the termination of method step a), the clutch is actuated to a predefined extent in the opening direction such that the exertion of a torque on a gearbox input shaft (12) is prevented.

5. Method according to at least one of Claims 1 to 4, **characterized in that** the method steps a) and b) are repeated with a predefined frequency, in particular 2 to 5 times.

6. Method according to at least one of Claims 1 to 5, **characterized in that**, after the predefined frequency of repetitions of method steps a) to c) is exceeded, the operating point of the friction clutch (3) is corrected.

7. Method according to at least one of Claims 1 to 6, **characterized in that** the extent of the correction of the operating point is dependent on the extent of the change in rotational speed in method step c).

8. Method according to Claim 1, **characterized in that** method steps a) and b) are initiated when the vehicle is stationary.

9. Method according to Claim 1, **characterized in that** method steps a) and b) are initiated, while the vehicle is driving, when it is signalled to the control device that a gearshift process is imminent.

## Revendications

1. Procédé de commande d'un embrayage à friction (3) opérant entre un moteur d'entraînement (2) et une boite de vitesses (4) après engagement d'une procédure de démarrage ou de changement de vitesse en tenant compte des changements d'un point de fonctionnement fixé de la courbe caractéristique de l'embrayage à friction, comprenant les étapes suivantes:
a) actionnement de l'embrayage à friction (3) dans la direction de fermeture jusqu'à un point prédéterminé par un dispositif de commande (11), lorsqu'un rapport engagé est signalé au dispositif de commande (11),
b) évaluation, au moyen du dispositif de commande (11), de la vitesse de rotation d'un arbre d'entrée de la boîte de vitesses (12) associé à la boîte de vitesses (4) au moyen d'un tachymètre (16) pendant l'étape a),
c) fin de l'étape a) dès que le tachymètre (16) signale au dispositif de commande (11) un changement défini de la vitesse de rotation de l'arbre d'entrée de la boîte de vitesses,
**caractérisé**
**en ce que** le point prédéterminé, jusqu'auquel l'embrayage à friction (3) doit être actionné au cours de l'étape a), est un point de réglage prédéterminé par le dispositif de commande suivant une courbe caractéristique,
**en ce que** le changement défini de la vitesse de rotation de l'arbre d'entrée de la boîte de vitesses est un dépassement d'une valeur limite prédéterminée, et
**en ce que** l'étape c) n'est exécutée que lorsque le dépassement de la valeur limite se produit avant d'atteindre le point de réglage prédéterminé par la courbe caractéristique.

2. Procédé selon la revendication 1, **caractérisé en ce que** le dispositif de commande (11) traite le signal de vitesse de rotation et un gradient de la vitesse de rotation déduit de celui-ci.

3. Procédé selon la revendication 2, **caractérisé en ce que** l'étape a) selon la revendication 1 est annulée, lorsqu'aussi bien la vitesse de rotation que le gradient de la vitesse de rotation dépassent leurs valeurs limites respectivement prédéterminées.

4. Procédé selon au moins une des revendications 1 à 3, **caractérisé en ce que**, après l'annulation de l'étape a), l'embrayage est actionné dans une mesure prédéterminée dans la direction d'ouverture, de telle manière que l'application d'un couple de rotation à l'arbre d'entrée de la boîte de vitesses (12) soit exclue.

5. Procédé selon au moins une des revendications 1 à 4, **caractérisé en ce que** les étapes a) et b) sont répétées avec une fréquence prédéterminée, en particulier 2 à 5 fois.

6. Procédé selon au moins une des revendications 1 à 5, **caractérisé en ce que**, après dépassement de la fréquence prédéterminée de répétitions des étapes a) à c), on corrige le point de fonctionnement de l'embrayage à friction (3).

7. Procédé selon au moins une des revendications 1 à 6, **caractérisé en ce que** l'importance de la correction du point de fonctionnement est réalisée en fonction de l'importance du changement de la vitesse de rotation selon l'étape c).

8. Procédé selon la revendication 1, **caractérisé en ce que** l'on engage les étapes a) et b) lorsque le véhicule est à l'arrêt.

9. Procédé selon la revendication 1, **caractérisé en ce que** l'on engage les étapes a) et b) lorsqu'un changement de vitesse imminent est signalé au dispositif de commande (11) pendant le déplacement du véhicule.
